# EUROPEAN PATENT SPECIFICATION

(11) **EP 0 573 657 B1**
(45) Date of publication and mention of the grant of the patent: **27.08.1997**
(21) Application number: 92924009.1
(22) Date of filing: 25.11.1992
(51) Int. Cl.: G05B 19/425, B25J 9/16

(54) **ROBOT CONTROLLER**
ROBOTERSTEUERUNG
CONTROLEUR DE ROBOT

(30) Priority: 26.11.1991 JP 311019/91; 29.06.1992 JP 194797/92
(43) Date of publication of application: 15.12.1993
(73) Proprietor: HITACHI CONSTRUCTION MACHINERY CO., LTD., Chiyoda-ku Tokyo 100 (JP)
(72) Inventor: KURENUMA, Toru, Niihari-gun Ibaraki 315 (JP); KASHIWAGI, Kunio, Tsuchiura-shi Ibaraki 300 (JP); YAMADA, Kazuyoshi, Chiyoda-machi Niihari-gun Ibaraki 315 (JP)
(74) Representative: Smulders, Theodorus A.H.J., Ir.
(86) International application number: JP9201539
(87) International publication number: WO9311477

(56) References cited:
- EP-A- 0 249 171
- EP-A- 0 331 265
- DE-A- 3 500 806
- JP-A- 3 262 009
- JP-A-49 021 581
- JP-U- 3 058 708
- PATENT ABSTRACTS OF JAPAN vol. 14, no. 577 (P-1146) 21 December 1990 & JP-A-22 047 703 (FUJITSU LTD.) 3 October 1990

## Description

### Technical Field

The present invention relates to a robot control apparatus and, more particularly, to a control apparatus applied to a robot which performs work accompanied with force based on control including force control.

### Background Art

In a robot for performing force work such as grinding work or the like, control regarding force is required in addition to control regarding position. A control apparatus used for the robot, therefore, needs to include means for simultaneously executing both of the force control and the position control. As an example of conventional control systems for the robot for performing the force work, "Virtual compliance control system" disclosed in JP-A-61-7905 has been known.

The robot control apparatus for executing both of the force control and the position control is constituted by: a section for teaching and setting control parameters (hereinafter referred to as "teaching/setting section"); and a section for executing various control by using the control parameters under certain control equations (hereinafter referred to as "control executing section"). When a user operates a teaching device to thereby allow a robot mechanism section to perform trial operations in order to provide the control parameters regarding the control of the force and position and the other control parameters for the robot, the teaching/setting section stores those control parameters into its memory. When the robot mechanism section actually starts its motion for the taught work by using the control parameters, the control executing section reads out a plurality of control parameters from the memory of the teaching/setting section in accordance with a predetermined procedure, calculates command amounts based on the control parameters, and then executes feedback control based on the command amounts to allow the robot mechanism section to actually perform the required work.

With respect to conventional literatures on the robot control apparatus to execute the control of force and position, patent literatures which disclose the control parameter teaching/setting method of using the teaching device and the teaching/setting section have not been particularly found out. On the other hand, as a scientific literature, R.P. Paul, "Robot Manipulator", translated by Tsuneo Yoshikawa, Corona Publishing Co., Ltd. exists. According to a setting method of control parameters disclosed in this literature, when a program to specify motions for the work is going to be written, actual numerical values regarding only force target value are directly written in the program.

In a working robot which operates in accordance with the robot control apparatus to execute the control of force and position, working process is apt to be complex as a whole because force control is partially executed for the working process. When the working process is complex, the number of a plurality of control parameters which are used in the robot control apparatus is relatively large in consideration of the working conditions or the like for each of a plurality of intervals which constitutes the whole work process. That is, when the number of the working conditions is large and the working conditions are complex, a method for setting control condition corresponding to each of the working conditions becomes also complex, and the number of control parameters is larger than that in the case where the working conditions are simple. when the number of control parameters is large, it takes a lot of time to teach and set the control parameters. Therefore, it is demanded that a number of control parameters can be promptly and easily taught and set in the robot control apparatus. On the other hand, in case of actually starting the work after many control parameters were stored into the teaching/setting section in the robot control apparatus, many control parameters necessary to perform the work must be read out from the memory of the teaching/setting section and must be set into the control executing section. Even in this case, it is demanded that many control parameters can be rapidly set.

As mentioned above, in the robot control apparatus for the robot which performs complex force work, with respect to the handling of the control parameters, it is particularly required to promptly teach and set many control parameters into the teaching/setting section, to promptly read out many control parameters from the memory of the teaching/setting section, and then to promptly set them into the control executing section. So long as such requirements are satisfied, when the complex force work is performed to the target portion of a workpiece, the control parameters according to the situation of each target portion can be promptly prepared. The robot, therefore, can perform the force operation that is necessary for every target portion of the workpiece, and thus the whole force work can be precisely performed.

From the above viewpoint, in order to precisely perform the force work to the workpiece, there is a subject with respect to how to handle many control parameters in teaching/setting the control parameters due to the teaching/setting section, and in transmitting the control parameters from the teaching/setting section into the control executing section.

Explanation regarding the robot to perform the force work will be further made from another viewpoint. In the case where the control executing section reads out many control parameters from the memory of the teaching/setting section and then allow the robot mechanism section to perform playback action by using the control parameters in order to actually perform the work, when in setting many control parameters into the control executing section the values of many control parameters are set one by one into the parameter section of the control executing section as in the conventional method, it takes a lot of time and thus the action of the robot mechanism section becomes slow. Particularly, in a robot control apparatus which is constituted in a manner such as to perform the work by changing the control condition in each of a plurality of intervals forming the whole work process, since many control parameters must be set for every interval, the action of the robot mechanism section becomes remarkably slow.

An object of the present invention is to provide a robot control apparatus in which in the teaching/setting of control parameters and in the reading out/setting of control parameters, a relatively large number of control parameters which are needed for the control of force and position are handled as a set in a lump for every working interval and therefore are promptly taught and set, and those control parameters are promptly read out from a teaching/setting section to set into a control executing section, and the setting operations of one set of many control parameters can be executed as simply as possible in consideration of a convenience on a programming process by the user.

Another object of the present invention is to provide a robot control apparatus in which performance in user's handling the apparatus is improved, and in process of writing a program by using many control parameters, the contents of the control parameters are easily displayed to enable the user observe them and the contents can be easily changed while observing the control parameters, thereby enabling the program to be easily written.

The invention therefore provides a robot control apparatus for controlling a robot mechanism section which performs force work to a workpiece by means of a working tool, in which force control and position control are required, having: a teaching/setting section for preparing plural control parameters corresponding to control conditions of said force work, and a control executing section for executing the force control and the position control, based on a predetermined control by using said plural control parameters, to allow said robot mechanism section to perform said force work; characterized in that said teaching/setting section includes a force control pattern storing means, a user program storing means, and a position parameter storing means, and sets said plural control parameters for the force control corresponding to each of said control conditions as a force control pattern into said force control pattern storing means in accordance with each of different working situations in said force work, and said control executing section includes a user program analyzing means for reading out a pattern selecting command from said user program storing means, a position parameter transfer means, a pattern selecting means for selecting one of the force control patterns from said force control pattern storing means in accordance with said pattern selecting command, and force control parameter input means, wherein, when performing said force work to said workpiece, said pattern selecting means selects the force control pattern corresponding to each of the working situations from the force control pattern storing means, and sets said plural control parameters included in the selected force control pattern into said force control parameter input means.

Preferably, according to the present invention the teaching/setting section has a force control pattern storing section for storing the plural control parameters corresponding to each of the control conditions in a lump as one force control pattern. Preferably, when the operation corresponding to each of the plural working situations which form the force work is performed, the control executing section selects a force control pattern corresponding to the operation from the force control pattern storing section, thereby setting the plural control parameters in a lump into control parameter input sections.

More preferably, the robot control apparatus according to the present invention has a teaching/operating unit for setting the plural control parameters in a lump in accordance with each of working situations, which is used when inputting the plural parameters through the teaching operation due to the teaching/setting section. The teaching/operating unit can be freely attached or detached to/from a main body, and therefore can be constituted as a portable unit.

It is remarked that EP-A-0,331,265 discloses a robot control apparatus having teaching/setting means for preparing plural control parameters to determine control conditions which are necessary for force work, and control executing means for executing said force control on the basis of predetermined control by using said plural control parameters to allow a robot mechanism section to perform said force.

Further, EP-A-0,249,171 suggests to handle plural control parameters in a lump for every control condition.

However, the specific robot control apparatus according to the present invention has not been disclosed and cannot be derived therefrom.

A practical constitution according to the present invention will now be explained. A robot control apparatus of the present invention is applied to a robot system including a robot mechanism section having a plurality of revolute joint portions, a working tool attached to the robot mechanism section, and driving devices which are respectively provided for each of the plurality of revolute joint portions in the robot mechanism section and are used to make the robot mechanism section operative. According to the robot control apparatus, the operation of each of the driving devices is controlled to thereby make the robot mechanism section operative and the working tool is moved to an arbitrary position, thereby allowing predetermined force work to be performed to a workpiece. The robot control apparatus has a force control operating section for executing force control. The force control operating section receives the signals outputted from position detecting means for detecting the position of the working tool and the signals outputted from force detecting means for detecting force applied to the working tool, and obtains deviations between those detection values and preset target values of the position and force, and further generates control command values for force control so as to eliminate those deviations. The robot control apparatus has a teaching/setting section which can teach and set in a lump various kinds of control parameters to be set in the control operating section.

In the above constitution, preferably, the teaching/setting section includes a user program storing section to store the user program, and a force control pattern storing section to store plural control parameters of each working situation in a lump as a force control pattern. A portion between the teaching/setting section and the force control operating section includes a user program analyzing section to read out a pattern selecting command from the user program storing section, and a pattern selecting section for selecting one of plural force control patterns stored in the force control pattern storing section in accordance with the pattern selecting command and for transferring the selected force control pattern to the force control operating section.

In the robot control apparatus, the robot operation in a teaching playback type can be performed and the teaching/setting section and control executing section are included. The teaching/setting section locating at the front stage of the robot control apparatus is constituted such that a plurality of control parameters which are set in accordance with each of different working situations in the force work can be taught and set in a lump. The data storing section in the teaching/setting section includes at least the user program storing section and the force control pattern storing section to store plural control parameters related to the force control. A plurality of control parameters corresponding to each of the working situation are individually stored as a group (or in a lump) into the force control pattern storing section used for storing a plurality of control parameters related to the force control. A group of control parameters constitutes one force control pattern. Each force control pattern is previously determined in correspondence to each situation of a series of operations. And then a number is assigned to each of the plural force control patterns determined. Therefore, when the user instructs the robot to perform a teaching operation and produce a user program by using the teaching/operating unit, one of the plural force control pattern is selected and designated for every working interval and thus the user program can be produced. The designation command of the force control pattern in accordance with each of the working intervals is practically included in the user program as a pattern selecting command. In the pattern selecting command, a program can be made by merely designating the number assigned to each of the force control patterns.

On the other hand, in the playback operation in which the control executing section reads out the plural control parameters stored in the memory of the teaching/setting section and executes the actual control by using the control parameters, the pattern selecting section extracts the force control pattern in accordance with the given pattern selecting command and then the force control pattern is set into the control operating section via a force control operation pre-processing section.

As mentioned above, since a plurality of control parameters used for the force control which is desired by the user can be taught and set in a lump as a force control pattern, a troublesomeness such that the control parameters are one by one taught and set can be avoided and the time required for the teaching operation can be reduced. After that, since the setting of the control parameters into the control executing section can be also performed in a lump for every control pattern, the time required for control can be also reduced.

Furthermore, the robot control apparatus of the present invention comprises an input device for inputting a user program and data, a display device for displaying the inputted user program, a teaching/setting section for fetching a plurality of control parameters to determine control condition necessary for force work through the input device and for preparing therein, and a control executing section for executing the force control to a workpiece on the basis of a predetermined control principle by using the plural control parameters prepared in the teaching/setting section, wherein the teaching/setting section has a force control pattern storing section for storing a plurality of control parameters corresponding to each of working situations in a lump as one force control pattern, and further display control means for selecting the necessary force control pattern and displaying it on a screen or changing the display the displayed force control pattern to a necessary force control pattern when the input device is operated to edit the user program displayed on the screen of the display device.

Furthermore, preferably, the display and change by the display control means are executed on the screen of the display device on which the user program has been displayed by input means for designating a force control pattern selecting command included in the user program. As an example of the input means, any one of a pointing device, a mouse and a keyboard can be used. The display control means is constituted in a manner such that operating means for allowing the force control pattern to be displayed on the screen of the display device on which the user program has been displayed is provided on the screen. The display control means further has a display function to overwrite on the image which has already been displayed on the screen of the display device.

According to the above robot control apparatus, when the user program is made by inputting the program and designation the necessary force control pattern through the input device of the teaching/operating unit, the user program and practical contents of the designated force control pattern are displayed on the display device. The user program thereby can be easily produced.

### Brief Description of Drawings

Fig. 1 is a block diagram showing a main constitution of a robot control apparatus according to the present invention, together with a robot mechanism section and a sensor section;
Fig. 2 is a block diagram showing a practical constitution of a force control operating section;
Fig. 3 shows an example of force work, and is a perspective view to clarify the corresponding relations between the control condition of each working interval in the force work and a user program;
Fig. 4 is a diagram showing a practical example of the user program;
Fig. 5 is a diagram showing the contents of a force control pattern;
Fig. 6 is a schematic diagram for illustrating various kinds of control parameters which are included in the force control pattern;
Fig. 7 is a diagram showing the contents of the force control pattern of No. 1;
Fig. 8 is a practical constitutional diagram showing in detail a connecting structure between the robot control apparatus and an input section and a display section of a teaching/operating unit;
Fig. 9 is a diagram showing an example displayed on the screen of the display section in the teaching/operating unit;
Fig. 10 is a diagram showing another example displayed on the screen of the display section;
Fig. 11 is a diagram showing another example displayed on the screen of the display section;
Fig. 12 is a block diagram showing a constitution of a computer system for realizing the robot control apparatus.

### Best Mode for Carrying out the Invention

Preferred embodiments of the present invention will now be explained hereinbelow on the basis of the accompanying drawings.

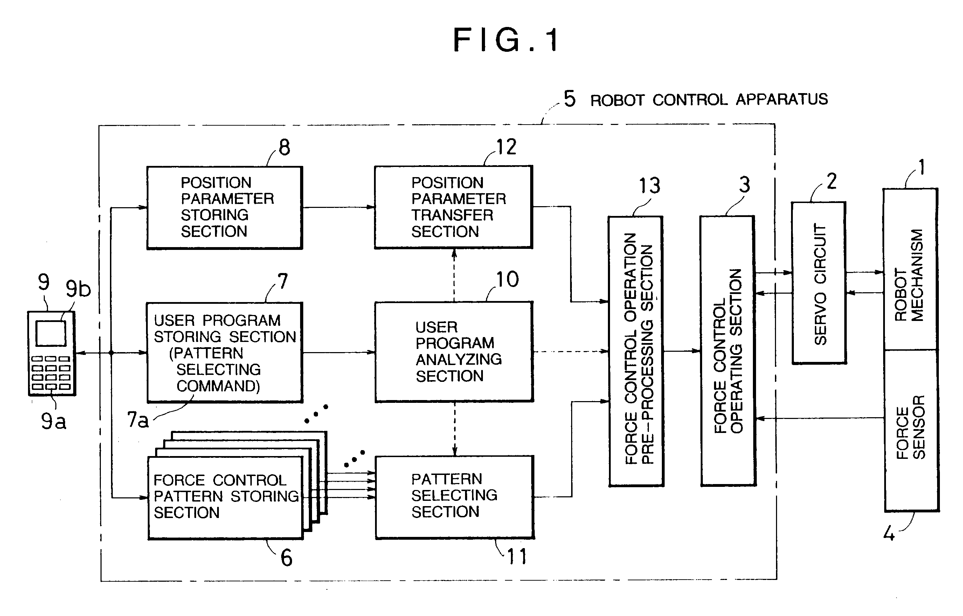

In Fig. 1, a robot mechanism 1 as a robot main body is constituted by mechanical portion, a driving unit attached to each movable portion (revolute joint portion) of the mechanical portion, working tool attached to the arm tip portion of the mechanical portion, and the like. In the robot mechanism 1, each of the driving units receives various kinds of control signals to determine the pose and operation of the robot mechanism 1, which are given from a force control operating section 3 through a servo circuit 2. The robot mechanism 1 operates in accordance with the received control signals and performs commanded tasks to target portions of a workpiece by using the working tool. The operation based on force control is included in the working operation performed by the working tool. Therefore, when the working tool performes the force work to the workpiece, the working tool is subjected to receive force as a reaction from the workpiece. The working tool is fixed to a force sensor 4 in terms of its conventional attaching structure. The force applied to the working tool is detected by the force sensor 4. The data regarding the force, which is detected by the force sensor 4, is sent to the force control operating section 3 and then is used as data regarding the actual state of the subsequent force control. Similarly, each of the movable portions in the robot mechanism 1 has a sensor to detect an operation amount thereof. When the movable portion operates by the driving of the driving unit, each sensor measures its operation amount and supplies measurement data to the force control operating section 3 through the servo circuit 2. The data regarding those operation amounts is used as actual position data for the subsequent force control and position control. The force control and position control are executed in the force control operating section 3 as mentioned above. In the embodiment, the force control will mainly be explained.

A block 5 shown by an alternate long and short dashed line is a section equivalent to a robot control apparatus . In a robot to which the robot control apparatus of the present invention is applied, a teaching playback system is used. The robot control apparatus 5 comprises a section for teaching and setting a plurality of control parameters, that is, a teaching/setting section, and a section for reading out the set plural control parameters and executing the control operation by using them, that is, a control executing section. The number of the plural control parameters which are treated in the robot control apparatus 5 is relatively large.

In the robot control apparatus 5, with respect to the trasmitting direction regarding teaching programs and various data, the teaching/setting section is located in the front stage on the left side in Fig. 1, and the control executing section is located in the post stage on the right side in Fig. 1. The teaching/setting section comprises a force control pattern storing section 6, a user program storing section 7, and a position parameter storing section. The control executing section comprises a user program analyzing section 10, a pattern selecting section 11, a position parameter transfer section 12, a force control operation pre-processing section 13, and the foregoing force control operating section 3.

In the case where the operator of the user instructs the robot mechanism 1 provided with the robot control apparatus 5 to perform actual work based on both of the force control and position control, data regarding various control parameters necessary to control force and position, and user programs necessary to perform the actual work are respectively stored into the force control pattern storing section 6 and the user program storing section 7 and the position parameter storing section 8, by performing trial work through teaching means prior to the actual work. The operator executes teaching operations by using a teaching/operating unit 9. The teaching/operating unit 9 has an input section 9a to input a control command and data by using a program language, and a display section 9b having a predetermined display area for allowing the operator to visually confirm the contents of the control commands and the like which were inputted by the operator. When the robot mechanism 1 is instructed to perform trial operations so as to conform with predetermined actual work before the actual work is performed, by using the teaching/operating unit 9, data values or the like which are required in each interval during the actual work with respect to the plural control parameters are given to each of the force control pattern storing section 6, user program storing section 7 and position parameter storing section 8, respectively. As will be clearly understood from the example shown in Fig. 1, a plurality of control parameters determined in the correspondence to a situation of each interval of the work procedures are stored in a lump as one set into force control pattern storing section 6. The set of data composed of the plural control parameters, which has been stored in a lump in the force control pattern storing section 6, is called a "force control pattern". Therefore, a plurality of force control patterns respectively including the plural control parameters are individually stored in the force control pattern storing section 6. All of the positions of the working tool during the working procedures are stored as position data into the position parameter storing section 8. Various forms of the operating method (for example data input method) and the operation (for example display method of the input data) as to the teaching/operating unit 9 in its teaching and operating mode, and furthermore various data storing forms of the force control pattern storing section 6, user program storing section 7 and position parameter storing section 8 will be explained later.

In the above constitution, the teaching/operating unit 9 can be constituted as a portable unit and freely attached or detached to/from the robot control apparatus 5.

The pattern selecting section 11 for selecting one of the plural force control patterns stored in the force control pattern storing section 6 and for supplying the selected force control pattern to the force control operation pre-processing section 13, the position parameter transfer section 12 for transferring the position parameters stored in the position parameter storing section 8 to the force control operation pre-processing section 13, the force control operation pre-processing section 13 and the force control operating section 3 are activated in accordance with the user program analyzing section 10 for extracting the user program from the user program storing section 7 and for analyzing them in order to perform the actual work.

A constitution and function of each section in the teaching/setting section will now be explained in detail.

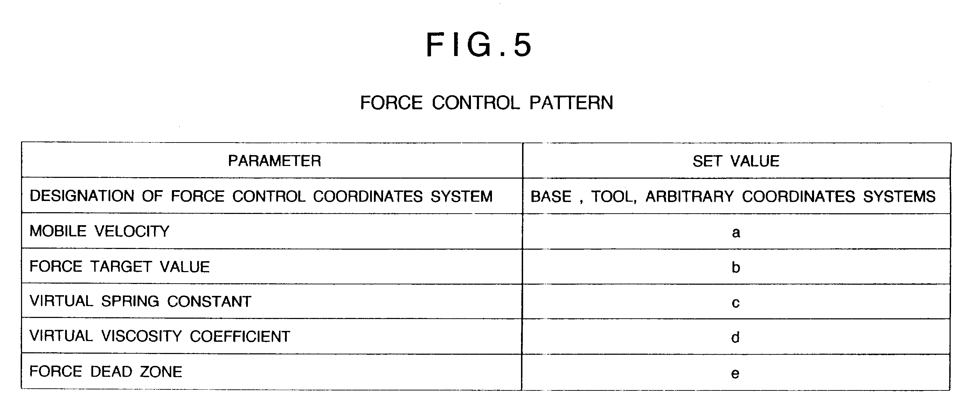

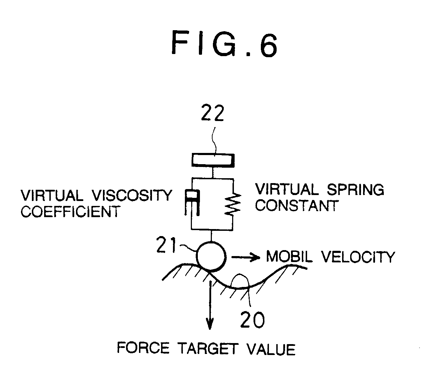

For example, as shown in Fig. 5, the set values of the plural control parameters have been stored in a lump as a set or group in each of the plural force control patterns which are stored in the force control pattern storing section 6. Those control parameters include, for example, designation of a force control coordinates system, a mobile velocity, a force target value, a virtual spring constant, a virtual viscosity coefficient, and a force dead zone. Set values a, b, c, d and e are respectively allocated to the mobile speed, force target value, virtual spring constant, virtual viscosity coefficient and force dead zone. Those control parameters are shown as an example in the case where the foregoing virtual compliance control was executed as a method of force control. Fig. 6 shows the relations between each of the various control parameters, that is, the mobile velocity, force target value, virtual spring constant and virtual viscosity coefficient, and the image of the control state. In Fig. 6 reference numeral 20 denotes a workpiece as a target object; 21 the working tool; and 22 a robot wrist portion as the arm tip portion of the robot mechanism 1. In Fig. 6, each of the virtual viscosity coefficient, virtual spring constant, mobile velocity and force target value is shown as a conceptual element.

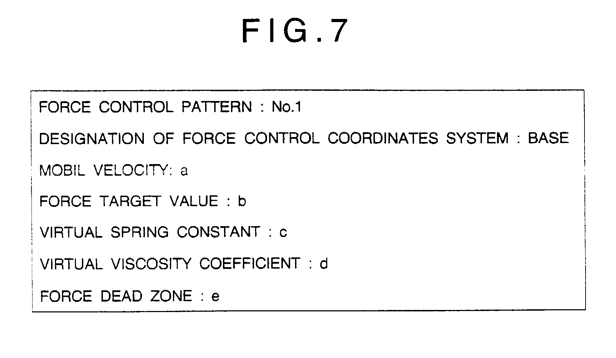

A set of control parameters shown in Fig. 5, namely, one force control pattern will now be explained. In Fig. 5, "designation of force control coordinates system" is used to designate a reference coordinates system when the force control is executed. The control parameters of the mobile velocity, force target value, virtual spring constant, virtual viscosity coefficient and force dead zone are respectively set for every axial direction of the reference coordinates system. As a force control coordinates system, one of the base coordinates system set to a base portion which the robot mechanism 1 is arranged, the tool coordinates system set to the working tool, and the arbitrary coordinates system which can previously be set in correspondence to an arbitrary position can be properly selected. "mobile speed" is a speed at which the working tool 21 is moved in the direction which has previously been taught. In this case, "the direction taught" denotes the moving direction which is determined in accordance with the position data stored in the position parameter storing section 8. "force target value" is a target value to press the working tool 21 onto the workpiece 20. Both of "virtual spring constant" and "virtual viscosity coefficient" are characteristic parameters in the virtual compliance control and respectively relate to a spring element and a damper element as shown in Fig. 6, which are realized by software techniques respectively. "dead zone of force" is used to set a dead zone for the force data detected in the force sensor 4 in order to assure the stability of operation. The plural control parameters included in one force control pattern needs to be successively changed as one set with the lapse of time in accordance with the exchange of the workpiece, or a finishing degree by a grinder or the like. A plurality of force control patterns, therefore, are prepared in accordance with each working situation or each interval. Each of the plural force control patterns is determined by analyzing working steps before the start of the work. The plural control patterns can be mutually distinguished by assigning a different number individually. The plural force control patterns have been stored in the force control pattern storing section 6 in accordance with a predetermined order in a state in which the foregoing numbers such as No. 1, No. 2, ··· were respectively assigned to them. Fig. 7 shows the contents of the force control pattern of No. 1.

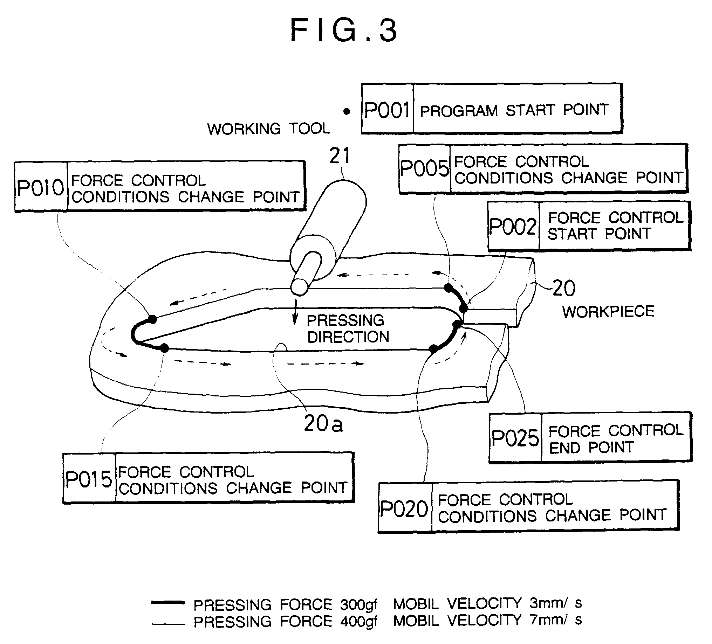

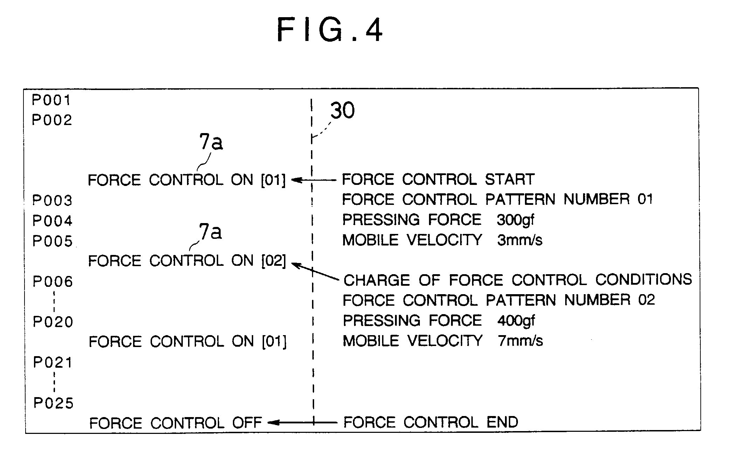

When the operator teaches procedures of the working operations or tasks to the robot mechanism 1, a teaching program regarding the procedures is stored into the user program storing section 7. Fig. 4 shows an example of description of the teaching program which is stored into the user program storing section 7. In Fig. 4, a series of command messages described in the region on the left side of a broken line 30 denotes the contents of the teaching program. The commands in the program are described in correspondence to numbers from P001 to P025 for example. These numbers indicate the step numbers of the teaching program and correspond to the taught position data, respectively. Those step numbers correspond to the step numbers written in Fig. 3 showing the operating state of the working tool when the teaching operation is performed.

Commands such as "FORCE CONTROL ON [01]", "FORCE CONTROL ON [02]", "FORCE CONTROL OFF", etc. shown in Fig. 4 correspond to the pattern selecting command 7a which is stored into the user program storing section 7. The pattern selecting command 7a is stored in the user program storing section 7 shown in Fig. 1. The command of "FORCE CONTROL ON [01]" is a command to declare the use of a set of force control parameters stored in the force control pattern number 01 (No. 1) in the force control pattern storing section 6. In this case, as shown in Fig. 3, the force control which is designated by the first command of "FORCE CONTROL ON [01]" is executed in the interval that is specified by the step numbers P002 to P005 of the working region of the workpiece 20. The force control is started by the command of "FORCE CONTROL ON [01]". The control based on the contents of the control parameters described in the region on the right side of the broken line 30 in Fig. 4 is executed in the above interval. The command of "FORCE CONTROL ON [02]" is subsequently executed at the position shown by the step number P005. This command is a command to declare the use of a set of force control parameters stored in the force control pattern number 02 in the force control pattern storing section 6. By this command, the change of the force control condition is executed and the force control is executed by using a new force control pattern in the intervals specified by the step numbers P005 to P010 shown in Fig. 3. As mentioned above, the force control pattern which is used in accordance with the working interval of the workpiece is determined on the basis of the number written in [ ]. "FORCE CONTROL OFF" is a command to declare that the force control is finished and the robot mechanism operates in the ordinary position control state. A region on the right side of the broken line 30 in Fig. 4 is a column which is provided to explain the content of each command.

An operating method regarding the teaching due to the teaching/operating unit 9 will now be explained in the conjunction with Fig. 4. The teaching contents of the user program and the like shown in Fig. 4 are supplied to the teaching/setting section of the robot control apparatus 5 by operating the input section 9a of the teaching/operating unit 9. In this instance, the supplied teaching contents are displayed on the screen of the display section 9b provided for the teaching/operating unit 9. As contents displayed in the display section 9b, a part or all of the teaching program shown in Fig. 4 is displayed. A display amount of the display unit 9b is determined by the area of the screen. In the handy type teaching/operating unit, therefore, since a large display section cannot be ordinarily provided, it is extremely convenient on the operation that the user program can be inputted by merely designating the number ([*]) to specify a command of predetermined force control with respect to the contents of the force control. The contents (established values of a set of control parameters) of "FORCE CONTROL ON [*]" which is specified by number "*" have previously independently inputted as mentioned above. When the teaching program is inputted by using the input section 9a of the teaching/operating unit 9, each "FORCE CONTROL ON [*]" is inputted as it is by designating the number. However, when the user wants to practically know the contents of the control, it is also possible to constitute in a manner such that by operating a predetermined operation button, the control contents can be displayed on the display section 9b. A specific constitution to display the control contents on the display section 9b will be explained in detail in conjunction with other embodiments.

The method of executing the force control on the basis of the user program and control parameters which have already been taught and set has been explained above with reference to Figs. 3 and 4. A method of teaching and setting a user program and various kinds of control parameters will be explained later with reference to Fig. 3 and 4.

The position parameter storing section 8 is a portion to store data such as position, postures or the like of each section of the robot mechanism 1 and the working tool 21 which are necessary for the operation of the robot mechanism 1 during the working operation. The position parameter storing section 8 has the same constitution as that of the teaching position data storing section provided for the conventional position control robot and has already been known. Although the robot control apparatus according to the present invention applied to a robot to perform force work, since the position control as well as the force control is also necessary, the position parameter storing section 8 is obviously provided.

A constitution and a function of each section in the control executing section will now be explained in detail. The control executing section is a portion having a function for executing the control and thus actually performing the work or tasks by using the program and control parameters regarding the work, which have been taught by using the teaching/operating unit 9 and teaching/setting section and then stored in the memory of the teaching/setting section.

The user program analyzing section 10 reads out the user program stored in the user program storing section 7 and interprets it, and then activates the necessary processes. For example, when the description regarding the position is included in the interpreted user program, the position parameter transfer section 12 is activated and the necessary position data is extracted from the position parameter storing section 8 and transferred to the force control operation pre-processing section 13. When the description regarding the pattern selecting command is included in the interpreted user program, the pattern selecting section 11 is activated. The force control pattern designated by the pattern selecting command is extracted from the force control pattern storing section 6 and transferred to the force control operation pre-processing pre-processing section 13. The force control operation section 13 executes the process for converting both of the position parameter and the plural control parameters included in the force control pattern to execute force control into the format which can be used in the force control operating section 3. Relatively many control parameters which have been taught and set to execute the force control are selected and transferred to the force control operation pre-processing section 13 in a lump as a set for every force control pattern. Therefore, many control parameters necessary to execute the control can be simultaneously set into the force control operating section 3 in a short time. According to the robot control apparatus of the embodiment, therefore, has advantages such that the operation of the robot mechanism 1 can be promptly controlled and its movement can be performed smoothly.

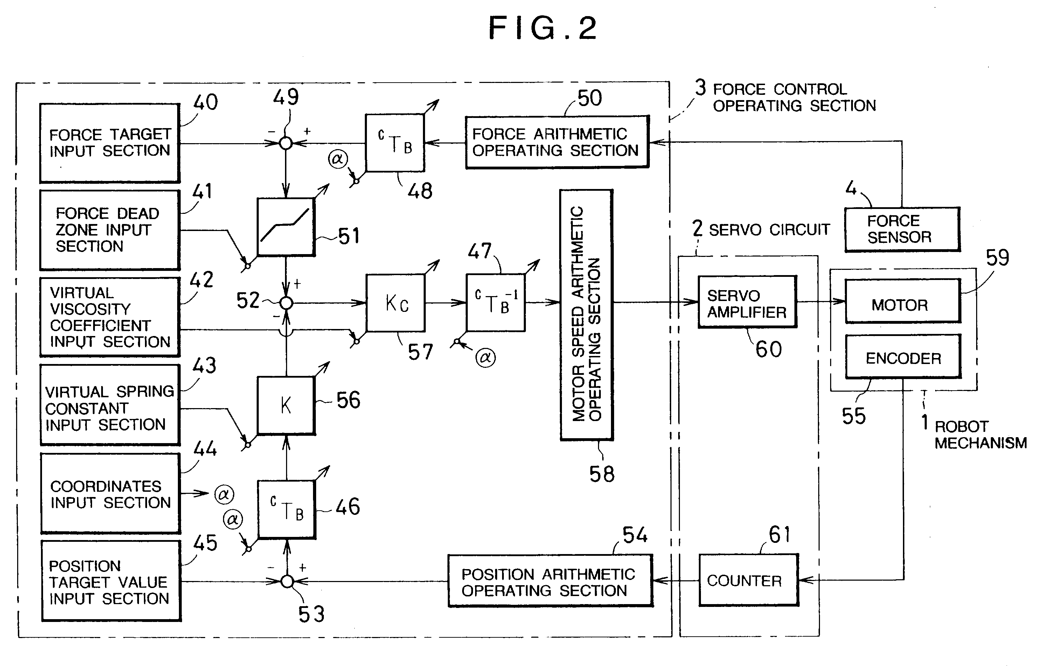

The above force control operating section 3 can execute the virtual compliance control and specifically has a constitution as a shown in Fig. 2. Each of a plurality of control parameters which have been converted into a predetermined format by the force control operation pre-processing section 13 is set into a corresponding parameter input section provided in the force control operating section 3. As shown in Fig. 2, the parameter input sections comprises various input sections respectively corresponding to the plural control parameters included in the force control pattern: that is, a force target value input section 40; a force dead zone input section 41; a virtual viscosity coefficient input section 42; a virtual spring constant input section 43; a coordinates system input section 44; and a position target value input section 45 corresponding to the position parameter. The control parameters about the force control coordinates system designation set in the coordinates system input section 44 are given as processing parameters to each of coordinate conversion processing sections 46, 47 and 48.

A constitution and operations of the force control operating section 3 will now be schematically explained. A force target value of the force target value input section 40 is given to a subtracter 49. The subtracter 49 obtains a difference between the actual force data outputted from the force sensor 4 and the force target value. At the front stage of the subtracter 49, the force data detected by the force sensor 4 is compensated by a force arithmetic operating section 50 on the basis of the gravity and is converted into the force control coordinates system by the coordinates conversion processing section 48. The difference signal obtained by the subtracter 49 is processed by a dead zone processing section 51 whose operating conditions have been set on the basis of the dead zone width set in the force dead zone input section 41. After that, the processed signal is supplied to a subtracter 52.

The position parameter set in the position target value input section 45 is given to a subtracter 53. The subtracter 53 obtains a difference between the present position of the working tool calculated by a position arithmetic operating section 54 and the position target value. An operation amount signal from an encoder 55 attached to each movable portion, namely, each revolute joint portion of the robot mechanism 1 is summed by a counter 61 and the resultant angle data is given as a position signal to the position arithmetic operating section 54. The position arithmetic operating section 54 calculates the present position by a kinematics operation. The difference data obtained by the subtracter 53 is converted into the force control coordinates system by the coordinates conversion processing section 46. On the basis of the difference data of the position, a spring force is calculated by a virtual spring force arithmetic operating section 56 using a virtual spring constant K set in the virtual spring constant input section 43. The spring force derived is supplied to the subtracter 52. The difference signal outputted from the subtracter 52 is processed by a virtual viscosity arithmetic operating section 57 on the basis of a virtual viscosity coefficient Kc set in the virtual viscosity input section 42. An output of the virtual viscosity arithmetic operating section 57 is converted into the coordinates system as a reference by the coordinate conversion processing section 47. Further, a rotational speed of a motor 59 as a driving unit that is arranged in each revolute joint portion is calculated by motor speed arithmetic operating section 58. A control command value of the calculated motor rotational speed is given to each motor 59 of the robot mechanism 1 through a servo amplifier 60 and a rotating operation of the motor 59 is controlled.

The control executing section of the robot control apparatus 5 mentioned above has been constituted so as to obtain a solution which satisfies control equations to specify a predetermined virtual compliance control system. The solution obtained by the above constitution is given to the motor 59 of the robot mechanism 1 as a control command which satisfies the control condition which have been determined by the plural control parameters respectively set in the control parameter input sections, thereby giving the operation to the robot mechanism 1. On the basis of the plural control parameters designated by the teaching/setting operations of the user, the robot mechanism 1 can be made operative.

In the constitution of Fig. 2, as mentioned above, the motor 59 as the driving unit arranged in each movable portion (revolute joint portion) of the robot mechanism 1 and the encoder 55 and counter 61 for detecting a movement amount of the movable portion are clearly shown. The servo circuit 2 shown in Fig. 1 includes the servo amplifier 60 and the counter 61.

An example of the case where the specific work is performed by the robot system to which the robot control apparatus 5 having the constitution described above is applied will now be explained with reference to Fig. 3.

Fig. 3 shows a state in which trial operations for task teaching are performed by operarting the working tool 21 attached to the robot mechanism 1 in order to set a number of various kinds of control parameters necessary for the actual work into the robot control apparatus 5 previous to the actual work. In this case, it is now assumed that the working tool 21 is a grinder. The working tool 21 performs the force work to grind the periphery of a hole 20a formed in the workpiece 20.

As shown in Fig. 3, as an example of the force work, a program start point (P001), a force control start point (P002), control condition change points (P005, P010, P015 and P020) which are determined in accordance with features of working portions of the workpiece 20, and a force control end point (P025) are defined. The contents of the force work at each position of the workpiece 20 is prepared as a group of force control patterns in correspondence to each interval on the basis of the operation of the teaching/setting section in the teaching and setting operations of the control parameters. That is, in each interval between the force control start point (P002) and the force control change point (P005), between the force control change point (P010) and the force control change point (P015), and between the force control change point (P020) and the force control end point (P025), the force control pattern number 01 is set so as to move the working tool 21 at a mobile velocity 3 mm/sec while pressing the working tool 21 onto the workpiece 20 by force of 300 gf. In each interval between the force control change point (P005) and the force control change point (P010), and between the force control change point (P015) and the force control change point (P020), the control pattern number 02 is set so as to move the working tool 21 while increasing the pressing force to 400 gf and raising the mobile velocity to 7 mm/sec. After that, the working tool 21 is moved from the program start point (P001) to the force control end point (P025) to perform the actual work. As mentioned above, in addition to that the position and force data of each point (P001 to P025) is taught, the command of "FORCE CONTROL ON" or the command of "FORCE CONTROL OFF" is given at each of the start point, change points and end point of the force control. Thus, the teaching program can be easily produced through the teaching operation for the work due to the working tool 21. Since a plurality of control parameters to specify each control condition can be handled as a group, the teaching program can be easily described. That is, a plurality of control parameters in each working interval in which the force control conditions are different are taught as a group of control pattern by using the teaching/operating unit 9 and can be set in a lump into the force control pattern storing section 6 for every control pattern. Therefore, the description of the teaching program can be simplified and the high operating speed of the teaching and setting operations can be realized.

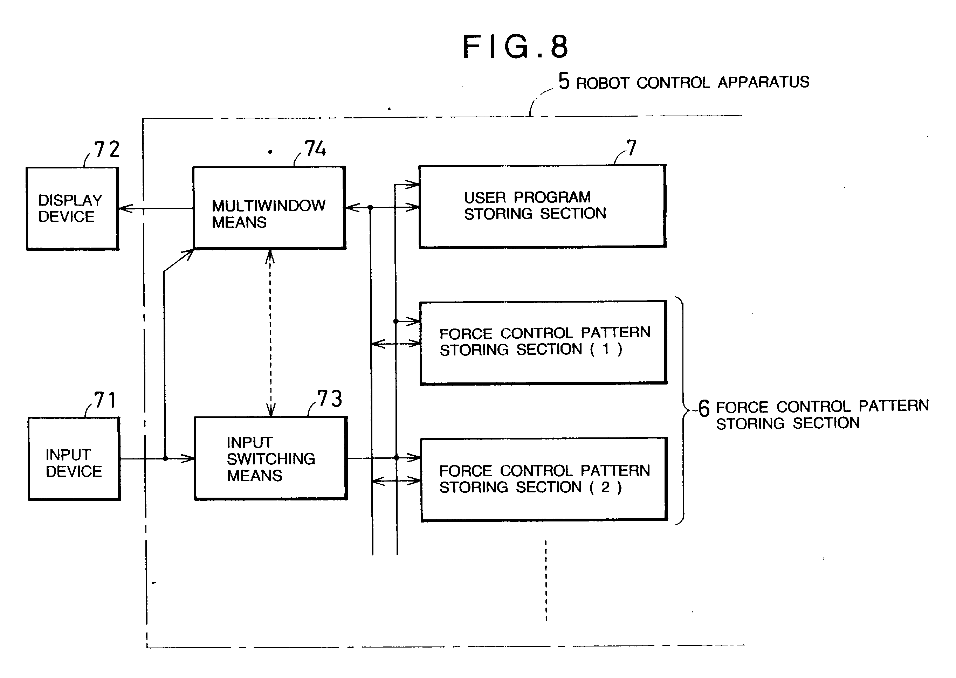

A specific constitution of the connecting portion between the input terminal of the robot control apparatus 5 and each of the input section 9a and display section 9b of the teaching/operating unit 9 and will now be explained in detail with reference to Fig. 8. The embodiment relates to an input technique of the input section 9a in the teaching and setting operations. In Fig. 8, only a part of the robot control apparatus 5 is shown for convenience of the explanation.

In Fig. 8, for simplification and generalization of explanation, the input section 9a of the teaching/setting unit 9 is shown as an input device 71 and the display section 9b is shown as a display device 71. Input switching means 73 is provided on the input side of the robot control apparatus 5 in correspondence to the input device 71 and multiwindow means 74 is provided in correspondence to the display device 72. A command given to the input device 71 is sent to one of the input switching means 73 and the multiwindow means 74. The input device 71 and the multiwindow means 74 can be interlocked. The user program and force control pattern given through the input device 71 are properly switched by the input switching means 73 and stored into the corresponding user program storing section 7 or force control pattern storing section 6.

When a command which needs the display by the display device 72 is supplied to the input device 71, the display command is given to the multiwindow means 74. The multiwindow means 74 has: a function to perform a fundamental display on the display device 72; a function to simultaneously display the data in other storing sections on the screen on which the data of a certain storing section has already been displayed; and a function to replace the data in a certain storing section displayed on the screen to the data in other storing sections. The multiwindow means 74 operates together with the input switching means 73 and functions as display control means for controlling the displayed contents on the screen of the display device 72.

The input switching means 73 has a function to allocate the commands for addition and change, which are supplied from the input device 71 to each storing section, to the data stored in each of a plurality of storing sections, which are displayed by the multiwindow means 74. The data generated via the multiwindow means 74 is displayed on the display device 72. A CRT or a liquid crystal display is generally used as a display device.

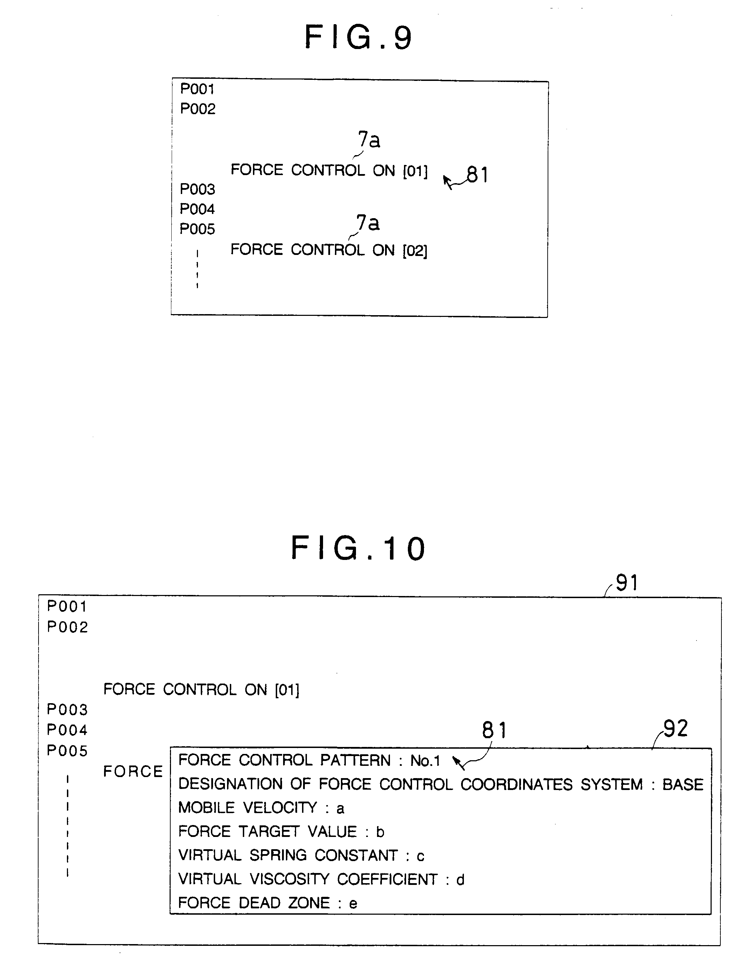

The display operation of the display device 72 will now be explained with reference to Figs. 9 through 11. Fig. 9 shows an image in the case where the user program described in Fig. 4 has been displayed on the screen of the display device 72. A cursor 81 is also indicated on the screen. Similarly, as shown in Fig. 10, the example of the force control pattern No. 1 of Fig. 7 mentioned above can be also displayed on the screen of the display device 72. The force control pattern No. 1 indicates the force control pattern that is stored into the storing section (1) of the force control pattern storing section 6. A plurality of force control patterns are managed by numbers. By designating the numbers by using the input device 71, the corresponding force control pattern is accessed from the force control pattern storing section 6.

When "FORCE CONTROL ON [01]" is designated by using the cursor 81 in the screen of the user program shown in Fig. 9, an screen as to the force control pattern No.1 can be overwritten into the screen of the user program by the function of the multiwindow means 74. Fig. 10 shows such a state. Reference numeral 91 denotes a screen to display the user program and 92 denotes a screen to display the contents of the force control pattern No. 1. The display on the screen of the display device 92 can be started and finished by operating a start key and an end key provided in the input device 91.

The addition or change of data is executed in the screen in which the cursor 81 exists. The cursor 81 is moved by using special keys provided for the input device 71 or by using a pointing device such as a mouse or the like. When the screen in which the cursor 81 exists is changed, the corresponding key in the input device 71 is operated and the input switching means 73 is made operative. According to the above process, the cursor 81 existing in the screen 92 showing the force control pattern in Fig. 10 is moved into the screen 91 showing the user program and the user program can be added or changed while displaying the screen 92 of the force control pattern. The portion exceeding the screen with respect to the user program or data can be displayed by ordinary scrolling function.

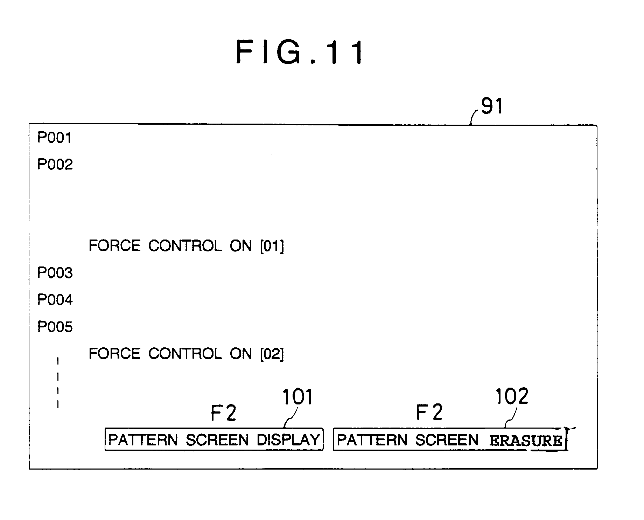

Fig. 11 shows another embodiment in which the screen 92 showing the force control pattern is allowed to be displayed on the screen 91 of the user program. In the constitution of the embodiment, a function key 101 of a pattern screen display to display the screen of the force control pattern and a function key 102 of a pattern screen erasure to erase to the screen are provided on the screen 91.

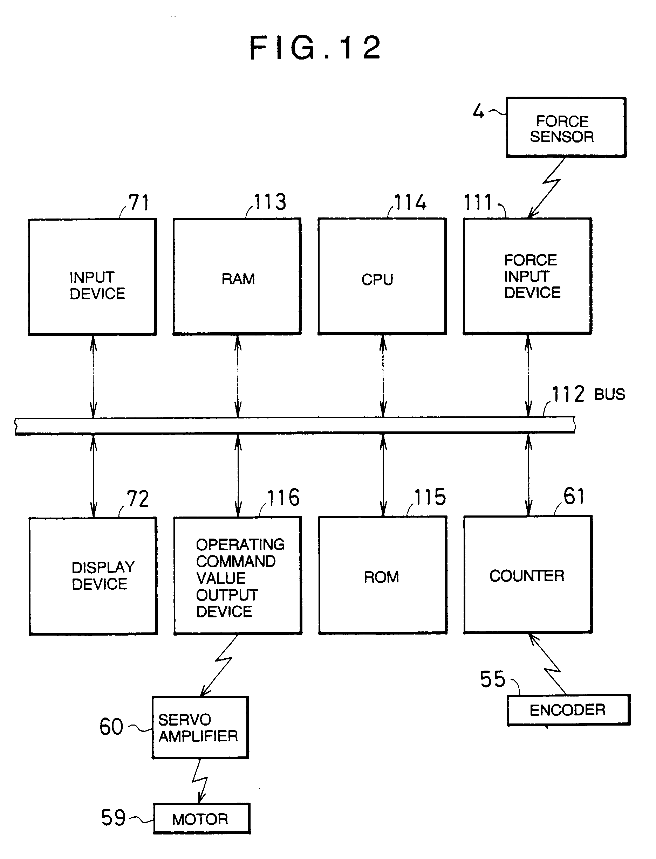

A constitution and operation of a computer system comprising the teaching/operating unit 9 and robot control apparatus 5 will be explained with reference to Fig. 12.

The detection value outputted from the force sensor 4 is supplied to a force input device 111. When the output of the force sensor 4 assumes an analog signal, the force input device 111 is constituted by an A/D converter. When the output is executed by a serial communication (RS422, RS232-C or the like), the force input device 111 is constituted by receiver suitable for the communication. The data fetched to the force input device 111 accumulated into an RAM 113 via a bus 112. Angle data of each shaft which is generated from the encoder 55 arranged in correspondence to each revolute joint portion is summed by the counter 61 and stored into the RAM 113. As mentioned above, the input device 71 corresponds to the input section 9a of the teaching/operating unit 9 and is a portion for inputting the control parameters, position parameters, user program and the like regarding the force control. The control parameters and the like supplied by the input device 71 are stored into the RAM 113 through the bus 112. As for the position parameter, the position at a time when it is instructed is stored into RAM 113. As mentioned above, the RAM 113 has the functions of the position parameter storing section 8, user program storing section 7, and force control pattern storing section 6.
Intermediate parameters which are necessary to arithmetic operating processes in a CPU 114 are further stored into the RAM 113. Various kinds of processing programs which are executed by the CPU 114 have been stored in an ROM 115. Each function of the multiwindow means 74 and input switching means 73 is realized by reading out and executing a multiwindow processing program or an input switching processing program in the ROM 115 by the CPU 114.

When the work by the force control is performed by the robot mechanism 1 using a plurality of control parameters which were taught and set, the CPU 114 reads out the user program and the control parameters and position control parameters by one set of force control patterns which have been determined in correspondence to each working interval and sets into the control executing section. The CPU 114 subsequently fetches the detection signals of the force sensor 4 and encoder 55 and compensates the extracted force data and calculates an operation command value while comparing the compensated data with the set control target value. The operation command value is generated from an operation command value output device 116 and is supplied to the motor 59 arranged in each revolute joint portion of the robot mechanism 1 through the servo amplifier 60. The CPU 114 realizes the function as a robot control apparatus 5 as mentioned above. As mentioned above, the CPU 114 includes the multiwindow means 74 and input switching means 73 and realizes their functions.

As will be obviously understood from the above description, in the robot system having the robot control apparatus for executing the control including the force control, in which the control parameters are taught and set, the control is executed by using the set control parameters and furthermore a plurality of control parameters can be handled in a lump as a force control pattern. In the teaching and setting operations, therefore, the operations for teaching and setting are simplified, the user program can be easily produced, and an operating efficiency can be improved. In the playback process by performing the teaching programm as to the control, a plurality of control parameters can be promptly set in the control executing section, and the control operating speed of the robot can be raised.

Since the control parameters which have already been taught and set can be also used in the other user program, an overlap teaching/operating can be prevented and the teaching operation can be easily performed.

Since many control parameters are set in a lump and the control parameters are subsequently handled as one set, it is possible to prevent that the user forgets a part of the control parameters, and the runaway of the robot due to it can be prevented.

Since the number of descriptions regarding the control parameters which appear in the user program that is taught is small, a whole structure of the user program can be easily recognized and a degree of understanding of a connecting state of the program is improved.

Further, in a constitution such that a plurality of control parameters which are necessary for control can be handled in a lump as a force control pattern, each parameter of the force control pattern can be referred on the screen of the display device during the production of the user program. Therefore, a production efficiency of the user program is improved and mistakes in the production of the program can be prevented and a safety in the use of the robot is improved. Since the force control parameters can be added or changed with reference to the user program, an erroneous setting of the parameters can be prevented. A safety in use of the robot is improved. The force control pattern can be easily set in correspondence to the program.

### Industrial Applicability

In a robot of the teaching playback type, the present invention is used as a control apparatus of a robot to perform force work such as a grinding operation or the like which needs force control. Particularly, the present invention is suitable in the case where the number of control parameters which are used in the force control is relatively large.

## Claims

1. A robot control apparatus for controlling a robot mechanism section (1) which performs force work to a workpiece (2) by means of a working tool (21), in which force control and position control are required, having:
a teaching/setting section for preparing plural control parameters corresponding to control conditions of said force work, and
a control executing section for executing the force control and the position control, based on a predetermined control by using said plural control parameters, to allow said robot mechanism section (1) to perform said force work;
characterized in that
said teaching/setting section includes a force control pattern storing means (6), a user program storing means (7), and a position parameter storing means (8), and sets said plural control parameters for the force control corresponding to each of said control conditions as a force control pattern into said force control pattern storing means (6) in accordance with each of different working situations in said force work, and
said control executing section includes a user program analyzing means (10) for reading out a pattern selecting command (7a) from said user program storing means (7), a position parameter transfer means (12), a pattern selecting means (11) for selecting one of the force control patterns from said force control pattern storing means (6) in accordance with said pattern selecting command (7a), and force control parameter input means (40,41,42,43,44,45),
wherein, when performing said force work to said workpiece (2), said pattern selecting means (11) selects the force control pattern corresponding to each of the working situations from the force control pattern storing means (6), and sets said plural control parameters included in the selected force control pattern into said force control parameter input means (40-45).

2. The robot control apparatus as claimed in claim 1, characterized in that said robot control apparatus has a teaching/operating means (9) for teaching said plural control parameters as a set in accordance with each of the working situations to said teaching/setting section.

3. The robot control apparatus as claimed in claim 2, wherein said teaching/operating means (9) is a portable unit separated from a main body portion.

4. The robot control apparatus as claimed in any one of claims 1-3, which is applied to said robot mechanism section (1) having said working tool (21), plural revolute joint portions, and driving means (59) arranged in each of the plural revolute joint portions, and which controls said driving means (59) to make the robot mechanism section (1) operative, and to allow the working tool (21) to perform said force work,
characterized in that said robot control apparatus includes a force control operating means (3) for executing arithmetic operations which are necessary to execute said force control, which has said force control parameter input means (40-45), and said force control operating means (3) receives signals outputted from position detecting means (55,61) for detecting the position of said working tool (21) and signals outputted from a force detecting means (4) for detecting force applied to said working tool (21), and obtains deviations between said signals and predetermined target values of position and force, and generates control command values for the position control and the force control so that the deviations are equal to zero.

5. The robot control apparatus as claimed in claim 4, characterized in that said user program analyzing means (10) and said pattern selecting means (11) which transfers the selected force control pattern to the force control operating means (3) are arranged between said teaching/setting section and said force control operating means (3).

6. The robot control apparatus as claimed in claim 2, characterized in that said robot control apparatus has an input device (9a,71) for inputting user programs, commands and data; a display device (9b,72) for displaying the inputted user programs; and a display control means (73,74) for controlling said display device (9b,72) based on the commands presented by said input device (9a,71) in a manner such that the user program inputted by said input device (9a,71) is displayed and is editable on a screen (91) of said display device (9b,72) and the force control pattern is displayed and is editable on said screen (91) by designating a corresponding pattern number.

7. The robot control apparatus as claimed in claim 6, wherein the editing operation for the force control pattern performed by said display control means (73,74) is based on designating a force control pattern selecting command included in the user program displayed on the screen (91) of said display device (9b,72) by means of said input device (9a, 71).

8. The robot control apparatus as claimed in claim 6, wherein said display control means (73,74) includes an operating means (101,102) for displaying a screen (92) of the force control pattern on the screen (91) of said display device (9b,72) which displays the user program.

9. The robot control apparatus as claimed in claim 6, wherein said display control means (73,74) has a display function for overwriting an image which has already been displayed on the screen (91) of said display device (9b,72) with another image (92).

## Patentansprüche

1. Robotersteuervorrichtung zur Steuerung eines Robotermechanismusteils (1), der an einem Werkstück (2) mit einem Arbeitswerkzeug (21) Kraftarbeit verrichtet, bei der Kraftsteuerung und Positionssteuerung erforderlich sind, mit:
einem Einlern-/Einstellteil zur Bereitstellung mehrerer Steuerparameter, die Steuerbedingungen der Kraftarbeit entsprechen, und
einem Steuerausführteil zum Ausführen der Kraftsteuerung und der Positionssteuerung auf der Grundlage einer vorbestimmten Steuerung unter Verwendung der mehreren Steuerparameter, derart, daß der Robotermechanismusteil (1) die Kraftarbeit durchführt;
dadurch gekennzeichnet, daß
der Einlern-/Einstellteil eine Kraftsteuermusterspeichervorrichtung (6), eine Benutzerprogrammspeichervorrichtung (7) und eine Positionsparameterspeichervorrichtung (8) aufweist und die mehreren Steuerparameter zur Kraftsteuerung, die den jeweiligen Steuerbedingungen entsprechen, als Kraftsteuermuster in die Kraftsteuermusterspeichervorrichtung (6) entsprechend den jeweiligen von verschiedenen Arbeitssituationen bei der Kraftarbeit überträgt, und
der Steuerausführteil eine Benutzerprogrammanalysevorrichtung (10) zum Auslesen eines Musterauswahlbefehls (7a) aus der Benutzerprogrammspeichervorrichtung (7) , eine Positionsparameterübertragungsvorrichtung (12), eine Musterauswahlvorrichtung (11) zur Auswahl eines der Kraftsteuermuster aus der Kraftsteuermusterspeichervorrichtung (6) entsprechend dem Musterauswahlbefehl (7a) und eine Kraftsteuerparametereingabevorrichtung (40, 41, 42, 43, 44, 45) aufweist,
wobei, wenn die Kraftarbeit an dem Werkstück (2) durchgeführt wird, die Musterauswahlvorrichtung (11) das Kraftsteuermuster, das jeder einzelnen der Arbeitssituationen entspricht, aus der Kraftsteuermusterspeichervorrichtung (6) auswählt und die in dem ausgewählten Kraftsteuermuster enthaltenen mehreren Steuerparameter in der Kraftsteuerparametereingabevorrichtung (40-45) einstellt.

2. Robotersteuervorrichtung nach Anspruch 1, dadurch gekennzeichnet, daß die Robotersteuervorrichtung eine Einlern-/Betriebsvorrichtung (9) aufweist, um die mehreren Steuerparameter als Gruppe entsprechend jeder einzelnen der verschiedenen Arbeitssituationen dem Einlern-/Einstellteil einzulernen.

3. Robotersteuervorrichtung nach Anspruch 2, wobei die Einlern/Betriebsvorrichtung (9) eine von einem Hauptkörperteil getrennte tragbare Einheit ist.

4. Robotersteuervorrichtung nach einem der Ansprüche 1-3, die bei dem Robotermechanismusteil (1) angewandt ist, welcher das Arbeitswerkzeug (21), mehrere Drehgelenkteile und in jedem der mehreren Drehgelenkteile eine Antriebsvorrichtung (59) aufweist, und die die Antriebsvorrichtung (59) steuert, um den Robotermechanismusteil (1) in Funktion zu versetzen und es dem Arbeitswerkzeug (21) zu ermöglichen, die Kraftarbeit auszuführen,
dadurch gekennzeichnet, daß die Robotersteuervorrichtung eine Kraftsteuerbetriebsvorrichtung (3) zur Ausführung von zur Durchführung der Kraftsteuerung notwendigen Rechenoperationen aufweist, die die Kraftsteuerparametereingabevorrichtung (40-45) aufweist, und die Kraftsteuerbetriebsvorrichtung (3) zur Detektion der Position des Arbeitswerkzeugs (21) von einer Postitionsdetektionsvorrichtung (55, 61) ausgegebene Signale und zur Detektion einer auf das Arbeitswerkzeug (21) ausgeübten Kraft von einer Kraftdetektionsvorrichtung (4) ausgegebene Signale empfängt und Abweichungen zwischen den Signalen und vorbestimmten Positions- und Kraftzielwerten erhält und Steuerbefehlwerte für die Positionssteuerung und die Kraftsteuerung erzeugt, derart, daß die Abweichungen gleich Null sind.

5. Robotersteuervorrichtung nach Anspruch 4, dadurch gekennzeichnet, daß die Benutzerprogrammanalysevorrichtung (10) und die Musterauswahlvorrichtung (11), die das ausgewählte Kraftsteuermuster an die Kraftsteuerbetriebsvorrichtung (3) überträgt, zwischen dem Einlern-/Einstellteil und der Kraftsteuerbetriebsvorrichtung (3) angeordnet sind.

6. Robotersteuervorrichtung nach Anspruch 2, dadurch gekennzeichnet, daß die Robotersteuervorrichtung aufweist:
eine Eingabevorrichtung (9a, 71) zur Eingabe von Benutzerprogrammen, Befehlen und Daten;
eine Anzeigevorrichtung (9b, 72) zum Anzeigen der eingegebenen Benutzerprogramme;
und eine Anzeigesteuervorrichtung (73, 74) zur Steuerung der Anzeigevorrichtung (9b, 72) auf der Grundlage der von der Eingabevorrichtung (9a, 71) angegebenen Befehle in einer solchen Weise, daß das von der Eingabevorrichtung (9a, 71) eingegebene Benutzerprogramm angezeigt wird und auf einem Bildschirm (91) der Anzeigevorrichtung (9b, 72) bearbeitbar ist und das Kraftsteuermuster angezeigt wird und auf dem Bildschirm (91) durch Bezeichnen einer entsprechenden Musternummer bearbeitbar ist.

7. Robotersteuervorrichtung nach Anspruch 6, wobei der von der Anzeigesteuervorrichtung (73, 74) durchgeführte Bearbeitungsvorgang für das Kraftsteuermuster darauf beruht, daß ein Kraftsteuermusterauswahlbefehl, der in dem auf dem Bildschirm (91) der Anzeigevorrichtung (9b, 72) angezeigten Benutzerprogramm enthalten ist, mit der Eingabevorrichtung (9a, 71) bezeichnet wird.

8. Robotersteuervorrichtung nach Anspruch 6, wobei die Anzeigesteuervorrichtung (73, 74) eine Betriebsvorrichtung (101, 102) zum Anzeigen eines Bildschirmbildes (92) des Kraftsteuermusters auf dem Bildschirm (91) der Anzeigevorrichtung (9b, 72), die das Benutzerprogramm anzeigt, aufweist.

9. Robotersteuervorrichtung nach Anspruch 6, wobei die Anzeigesteuervorrichtung (73, 74) eine Anzeigefunktion zum Überschreiben eines Bildes, das bereits auf dem Bildschirm (91) der Anzeigevorrichtung (9b, 72) angezeigt wurde, durch ein weiteres Bild (92) aufweist.

## Revendications

1. Appareil de commande de robot destiné à commander une section de mécanisme de robot (1) qui réalise un travail de force sur une pièce (2) au moyen d'un outil de travail (21), dans lequel une commande de force et une commande de position sont nécessaires, ayant :
une section d'apprentissage/réglage destinée à préparer plusieurs paramètres de commande correspondant à des conditions de commande dudit travail de force, et
une section d'exécution de commande destinée à exécuter la commande de force et la commande de position, sur la base d'une commande prédéterminée en utilisant ladite multiplicité de paramètres de commande, afin de permettre à ladite section de mécanisme de robot (1) de réaliser ledit travail de force;
caractérisé en ce que
ladite section d'apprentissage/réglage comprend des moyens de stockage de modèle de commande de force (6), des moyens de stockage de programme d'utilisateur (7) et des moyens de stockage de paramètre de position (8) et règle ladite multiplicité de paramètres de commande pour la commande de force correspondant à chacune desdites conditions de commande sous forme d'un modèle de commande de force dans lesdits moyens de stockage de modèle de commande de force (6) en fonction de chacune des différentes situations de travail dans ledit travail de force, et
ladite section d'exécution de commande comprend des moyens d'analyse de programme d'utilisateur (10) destinés à lire une commande de sélection de modèle (7a) provenant desdits moyens de stockage de programme d'utilisateur (7), des moyens de transfert de paramètre de position (12), des moyens de sélection de modèle (11) destinés à sélectionner un des modèles de commande de force provenant desdits moyens de stockage de modèle de commande de force (6) en fonction de ladite commande de sélection de modèle (7a), et des moyens d'entrée de paramètre de commande de force (40, 41, 42, 43, 44, 45),
lesdits moyens de sélection de modèle (11) selectionnant le modèle de commande de force correspondant à chacune des situations de travail provenant des moyens de stockage de modèle de commande de force (6), et réglant ladite multiplicité de paramètres de commande inclus dans le modèle de commande de force sélectionné dans lesdits moyens d'entrée de paramètre de commande de force (40 à 45) lors de la réalisation dudit travail de force sur ladite pièce (2).

2. Appareil de commande de robot selon la revendication 1, caractérisé en ce que ledit appareil de commande de robot possède des moyens d'apprentissage/fonctionnement (9) destinés à l'apprentissage pour ladite section d'apprentissage/réglage de ladite multiplicité de paramètres de commande sous forme d'un ensemble en fonction de chacune desdites situations de travail.

3. Appareil de commande de robot selon la revendication 2, dans lequel lesdits moyens d'apprentissage/fonctionnement (9) sont constitués par une unité portable séparée d'une partie de corps principal.

4. Appareil de commande de robot selon l'une quelconque des revendications 1 à 3, qui est appliqué à ladite section de mécanisme de robot (1) ayant ledit outil de travail (21), plusieurs parties d'articulation, et des moyens d'entraînement (59) disposés dans chacune des différentes parties d'articulation, et qui commandent lesdits moyens d'entraînement (59) afin de rendre active la section de mécanisme de robot (1) afin de permettre à l'outil de travail (21) de réaliser ledit travail de force,
caractérisé en ce que ledit appareil de commande de robot comprend des moyens d'actionnement de commande de force (3) destinés à exécuter des opérations arithmétiques qui sont nécessaires pour exécuter ladite commande de force, qui possèdent lesdits moyens d'entrée de paramètre de commande de force (40 à 45), et lesdits moyens d'actionnement de commande de force (3) reçoivent des signaux délivrés par des moyens de détection de position (55, 61) destinés à détecter la position dudit outil de travail (21) et des signaux délivrés par des moyens de détection de force (4) destinés à détecter une force appliquée sur ledit outil de travail (21), et obtiennent des écarts entre lesdits signaux et des valeurs visées prédéterminées de position et de force, et génèrent des valeurs de commande pour la commande de position et la commande de force de sorte que les écarts sont égaux à zéro.

5. Appareil de commande de robot selon la revendication 4, caractérisé en ce que lesdits moyens d'analyse de programme d'utilisateur (10) et lesdits moyens de sélection de modèle (11) qui transfèrent le modèle de commande de force sélectionné vers les moyens d'actionnement de commande de force (3) sont disposés entre ladite section d'apprentissage/réglage et lesdits moyens d'actionnement de commande de force (3).

6. Appareil de commande de robot selon la revendication 2, caractérisé en ce que ledit appareil de robot possède un dispositif d'entrée (9a, 71) destiné à entrer des programmes d'utilisateur, des commandes et des données; un dispositif d'affichage (9b, 72) destiné à afficher les programmes d'utilisateur entrés; et des moyens de commande d'affichage (73, 74) destinés à commander ledit dispositif d'affichage (9b, 72) sur la base des commandes présentées par ledit dispositif d'entrée (9a, 71) d'une manière telle que le programme d'utilisateur entré par ledit dispositif d'entrée (9a, 71) est affiché et peut être édité sur un écran (91) dudit dispositif d'affichage (9b, 72) et le modèle de commande d force est affiché et peut être édité sur ledit écran (91) en désignant un numéro de modèle correspondant.

7. Appareil de commande de robot selon la revendication 6, dans lequel l'opération d'édition pour le modèle de commande de force réalisée par lesdits moyens de commande d'affichage (73, 74) est basée sur la désignation d'une commande de sélection de modèle de commande de force inclus dans le programme d'utilisateur affiché sur l'écran (91) dudit dispositif d'affichage (9b, 72) au moyen dudit dispositif d'entrée (9a, 71).

8. Appareil de commande de robot selon la revendication 6, dans lequel lesdits moyens de commande d'affichage (73, 74) comprennent des moyens d'actionnement (101, 102) destinés à afficher un écran (92) du modèle de commande de force sur l'écran (91) dudit dispositif d'affichage (9b, 72) qui affiche le programme d'utilisateur.

9. Appareil de commande de robot selon la revendication 6, dans lequel lesdits moyens de commande d'affichage (73, 74) ont une fonction d'affichage destinée à écrire par dessus une image qui a déjà été affichée sur l'écran (91) du dispositif d'affichage (9b, 72) avec une autre image (92).
